# EUROPEAN PATENT APPLICATION

(11) **EP 3 018 909 A1**
(43) Date of publication of application: **11.05.2016**
(21) Application number: 14819372.5
(22) Date of filing: 20.06.2014
(51) Int. Cl.: H04N 21/235, H04N 21/262

(54) **CONTENT PROVISION DEVICE, CONTENT PROVISION METHOD, PROGRAM, TERMINAL DEVICE, AND CONTENT PROVISION SYSTEM**

(30) Priority: 02.07.2013 JP 2013138627
(71) Applicant: Sony Corporation, Tokyo 108-0075 (JP)
(72) Inventor: YAMAGISHI, Yasuaki, Tokyo 108-0075 (JP)
(74) Representative: Witte, Weller & Partner Patentanwälte mbB
(86) International application number: PCT/JP2014/066398
(87) International publication number: WO 2015/001985

(57) **Abstract**

The present disclosure relates to a content supply device, a content supply method, a program, a terminal device, and a content supply system, which are capable of rapidly checking delivered content in DASH. The content supply device of the present disclosure generates mosaic CH streaming data by synthesizing a plurality of streams having different subjects, generates a mosaic CH segment stream by delimiting the generated mosaic CH streaming data according to a timing in common with another mosaic channel, unicast-delivers the mosaic CH segment stream, and multicast-delivers the mosaic CH segment stream. The content supply device generates a metafile for a reception side to receive the mosaic CH segment stream that is unicast-delivered and multicast-delivered. The present disclosure can be applied to a system that delivers content in a streaming manner.

## Description

### Technical Field

The present disclosure relates to a content supply device, a content supply method, a program, a terminal device, and a content supply system, and more particularly, to a content supply device, a content supply method, a program, a terminal device, and a content supply system, which are capable of rapidly checking content delivered through a plurality of different channels.

### Background Art

Moving Picture Experts Group-Dynamic Adaptive Streaming over HTTP (hereinafter, referred to as "DASH") (MPEG-DASH) using the same HTTP as browsing of a web site as an internationally standardized moving image delivery protocol available for moving image delivery via the Internet has been known (for example, see Non-Patent Literature 1).

DASH implements adaptive streaming technology. In other words, a content supply side is configured to prepare a plurality of streams in which content of the same subject is included, and an image quality, an angle of view size, or the like is different according to a communication environment of the Internet serving as a delivery path or a capability or a state of a reception side. On the other hand, the reception side can select an optimal stream among the plurality of streams prepared by the supply side according to the communication environment of the Internet, the decoding capability of the reception side, or the like and acquire and reproduce the selected optimal stream.

As described above, in DASH, a metafile called a media presentation description (MPD) is supplied from the supply side to the reception side so that the reception side can adaptively select, receive, and reproduce a stream.

An address (url information) of a supply source of streaming data (media data such as audio/video/subtitle) of content divided into chunks is described in the MPD. The reception side accesses a server serving as a content supply source based on the url information, requests streaming data, and receives and reproduces streaming data HTTP-unicast-delivered according to the request.

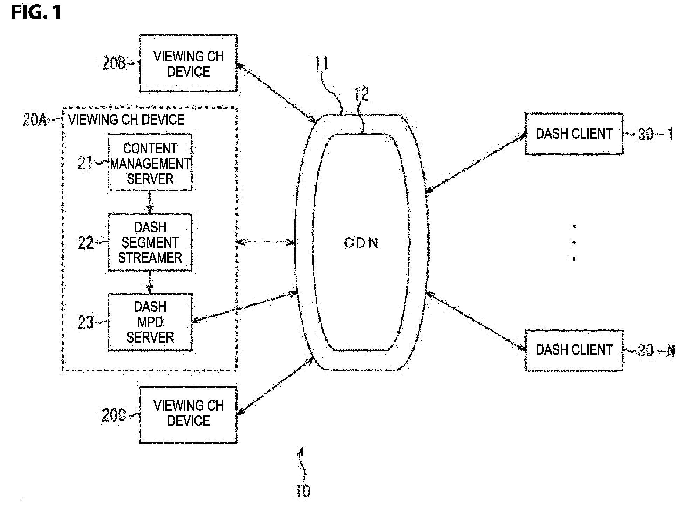

FIG. 1 illustrates an exemplary configuration of a content supply system that delivers content in a streaming manner based on DASH.

A content supply system 10 includes a plurality of viewing CH devices 20 (in this case, 20A, 20B, and 20C) corresponding to channels that supply content and a plurality of DASH clients 30 of a side at which content is received. The DASH client 30 is connected to the viewing CH device 20 via a contents delivery network (CDN) 12 using the Internet 11.

The viewing CH device 20A delivers content of the same subject through a plurality of streams having different bit rates as a channel A. Similarly, the viewing CH device 20B delivers content of the same subject, which is different from content of the channel A, through a plurality of streams having different bit rates as a channel B. The same applies to the viewing CH device 20C. Hereinafter, when it is unnecessary to distinguish the viewing CH devices 20A, 20B, and 20C individually, the viewing CH device is referred to simply as a "viewing CH device 20."

The viewing CH device 20 includes a content management server 21, a DASH segment streamer 22, and a DASH MPD server 23.

The content management server 21 manages source data of content to be supplied to the DASH client 30, generates a plurality of pieces of streaming data having different bit rates as source data, and outputs the generated streaming data to the DASH segment streamer 22.

The DASH segment streamer 22 generates a segment stream by temporally dividing each piece of streaming data into segments, holds the segment stream as a file, and notifies the DASH MPD server 23 of an address of a supply source of the file as metadata. The DASH segment streamer 22, as a web server, HTTP-unicast-delivers the file of the segment stream to the request source in response to a request (a HTTP request) from the DASH client 30.

The DASH MPD server 23 generates an MPD in which, for example, the address indicating the supply source (that is, the DASH segment streamer 22) of the file of the segment stream is described. The DASH MPD server 23, as the web server, HTTP-unicast-delivers the generated MPD to the request source in response to the request (the HTTP request) from the DASH client 30.

The DASH client 30 requests the DASH MPD server 23 to transmit the MPD, requests the DASH segment streamer 22 to transmit the file of the segment stream based on the MPD that is HTTP-unicast-delivered in response to the request, and receives and reproduces the file of the segment stream that is HTTP-unicast-delivered in response to the request.

The CDN 12 includes a cache server (not illustrated), and the cache server caches the MPD or the file of the segment stream that is HTTP-unicast-delivered via the CDN 12. The cache server can HTTP-unicast-deliver the cached MPD or the file of the segment stream to the DASH client 30 of the request source instead of the DASH MPD server 23 serving as the web server or the DASH segment streamer 22.

### Citation List

### Non-Patent Literature

Non-Patent Literature 1: Mitsuhiro Hirabayashi, "Achieving Uninterrupted Video Streaming Using Existing Web Servers," NIKKEI ELECTRONICS, March 19, 2012

### Summary of Invention

### Technical Problem

As described above, as the viewing CH devices 20 corresponding to a plurality of channels are prepared in the content supply system illustrated in FIG. 1, the DASH client 30 can select, receive, and reproduce content delivered from the respective channels.

When it is possible to select and view a plurality of pieces of content having different subjects, the viewer (the user of the DASH client 30) is considered to perform so-called zapping (an operation of switching a channel one after another within a short time and searching for content to be viewed), similarly to when viewing a television broadcast.

In DASH, switching between channels is performed in units of segments or in units of sub segments obtained by subdividing a segment. Hereinafter, a description continues under the assumption that in DASH, switching between channels is performed in units of segments.

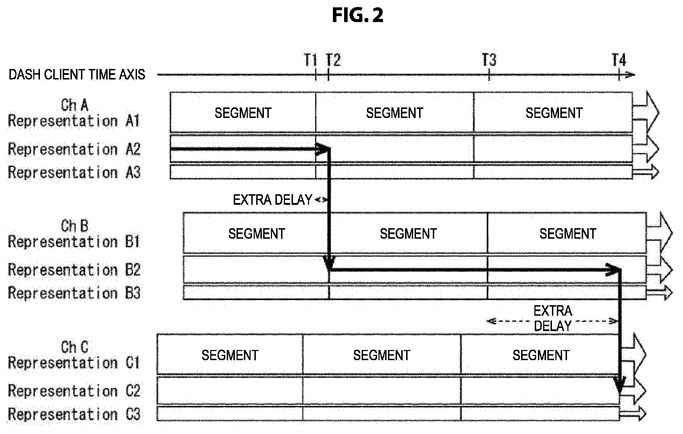

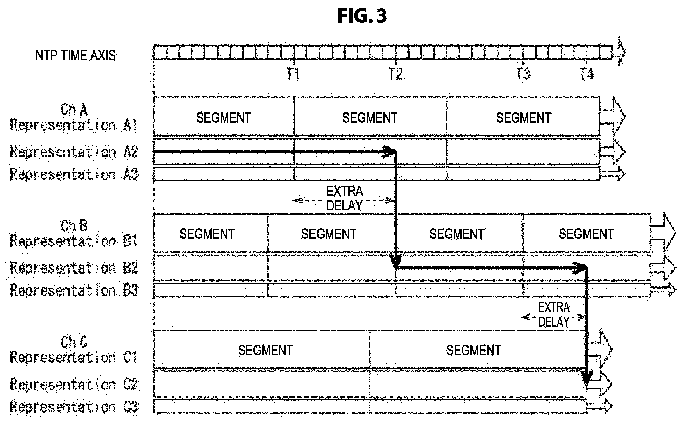

FIGS. 2 and 3 illustrate that three segment streams (representations) having different bit rates serving as content of the same subject in channels A, B, and C of DASH are prepared, and illustrate switching examples when zapping between channels is performed.

In DASH, since a segment length (duration) of a segment stream generated by each channel is arbitrary, channels need not necessarily have the same segment length. Further, channels need not necessarily have the same reproduction start time of a segment at the head of content.

FIG. 2 illustrates an example in which channels have neither the same segment length nor the same reproduction start time of the segment at the head of content.

In this case, although the user of the DASH client 30 gives an instruction to perform switching (zapping) to a representation B2 of a channel B before T1 on a DASH client time axis while viewing a representation A2 of a channel A, the switching is delayed until T2 serving as a segment delimiter of the representation B2. Further, although the user gives an instruction to perform switching to a representation C2 of a channel C before T3 while viewing the representation B2 of the channel B, the switching is delayed until T4 serving as a segment delimiter of the representation C2.

FIG. 3 illustrates an example in which the reproduction start times of the segments at the head of content of channels are matched in synchronization with an NTP time axis, but channels do not have the same segment length.

In this case, even if the user of the DASH client 30 gives an instruction to perform switching to the representation B2 of the channel B before T1 on the NTP time axis while viewing the representation A2 of the channel A, the switching is delayed until T2 serving as a segment delimiter of the representation B2. Further, even if the user gives an instruction to perform switching to the representation C2 of the channel C before T3 while viewing the representation B2 of the channel B, the switching is delayed until T4 serving as a segment delimiter of the representation C2.

As illustrated in FIGS. 2 and 3, in DASH, since an extra delay may occur when switching of a segment stream is performed between channels, it is difficult to perform rapid zapping between channels.

Further, a time of the above-described extra delay can be reduced by reducing the segment length of the segment stream of each channel to be extremely small. However, in this case, coding efficiency deteriorates, a data amount of a segment stream increases, and a wide communication band is necessary, and thus an excessive load is put on the Internet 11, and service quality is likely to deteriorate.

The present disclosure was made in light of the foregoing, and it is desirable to rapidly check a plurality of pieces of content delivered through a plurality of channels.

### Solution to Problem

According to a first aspect of the present disclosure, there is provided a content supply device that supplies content as a mosaic channel, the content supply device including: a synthesizing unit configured to generate mosaic CH streaming data by synthesizing a plurality of streams having different subjects; a mosaic CH segment stream generating unit configured to generate a mosaic CH segment stream by delimiting the generated mosaic CH streaming data according to a timing in common with another mosaic channel; a unicast delivering unit configured to unicast-deliver the mosaic CH segment stream; a multicast delivering unit configured to multicast-deliver the mosaic CH segment stream; and a metafile generating unit configured to generate a metafile that is for a reception side to receive the mosaic CH segment stream that is unicast-delivered and multicast-delivered.

The metafile generating unit can generate an extended MPD as the metafile.

The metafile generating unit can generate the MPD including the MOSAIC element.

The metafile generating unit can generate an extended HTML inclusion type mosaic CH MPD in which information of an area of the mosaic CH streaming data disposed on a screen and information of a stream corresponding to each area are described as the MOSAIC element.

The metafile generating unit can generate an extended HTML reference type mosaic CH MPD in which information of an area of the mosaic CH streaming data disposed on a screen and a reference to a file which describes information of a stream corresponding to each area are described as the MOSAIC element.

The unicast delivering unit can further unicast-deliver the metafile. The multicast delivering unit can further multicast-deliver the metafile.

The unicast delivering unit can HTTP-unicast-deliver the mosaic CH segment stream. The multicast delivering unit can FLUTE-multicast-deliver a mosaic CH FLUTE stream based on the mosaic CH segment stream.

The content supply device according to the first aspect of the present disclosure can further include: an RTP stream generating unit configured to generate a mosaic CH RTP stream, based on the mosaic CH streaming data. The multicast delivering unit can further RTP-multicast-deliver the mosaic CH RTP stream.

The mosaic CH segment stream generating unit can generate the mosaic CH segment stream by aligning a head of a minimum unit of the mosaic CH segment stream with the other mosaic channel in synchronization with an NTP time axis and delimiting the mosaic CH stream into the minimum units according to a duration in common with the other mosaic channel.

According to the first aspect of the present disclosure, there is provided a content supply method of a content supply device that supplies content as a mosaic channel, the content supply method including: a synthesizing step of generating, by the content supply device, mosaic CH streaming data by synthesizing a plurality of streams having different subjects; a mosaic CH segment stream generating step of generating, by the content supply device, a mosaic CH segment stream by delimiting the generated mosaic CH streaming data according to a timing in common with another mosaic channel; a unicast delivering step of unicast-delivering, by the content supply device, the mosaic CH segment stream; a multicast delivering step of multicast-delivering, by the content supply device, the mosaic CH segment stream; and a metafile generating step of generating, by the content supply device, a metafile that is for a reception side to receive the mosaic CH segment stream that is unicast-delivered and multicast-delivered.

According to the first aspect of the present disclosure, there is provided a program causing a computer that supplies content as a mosaic channel to function as: a synthesizing unit configured to generate mosaic CH streaming data by synthesizing a plurality of streams having different subjects; a mosaic CH segment stream generating unit configured to generate a mosaic CH segment stream by delimiting the generated mosaic CH streaming data according to a timing in common with another mosaic channel; a unicast delivering unit configured to unicast-deliver the mosaic CH segment stream; a multicast delivering unit configured to multicast-deliver the mosaic CH segment stream; and a metafile generating unit configured to generate a metafile that is for a reception side to receive the mosaic CH segment stream that is unicast-delivered and multicast-delivered.

In the first aspect of the present disclosure, mosaic CH streaming data is generated by synthesizing a plurality of streams having different subjects, a mosaic CH segment stream is generated by delimiting the generated mosaic CH streaming data according to a timing in common with another mosaic channel, and the mosaic CH segment stream is unicast-delivered and multicast-delivered. A metafile that is for a reception side to receive the mosaic CH segment stream that is unicast-delivered and multicast-delivered is generated.

According to a second aspect of the present disclosure, there is provided a terminal device that receives and reproduces content delivered from a content supply device that supplies the content as a mosaic channel. The content supply device includes a synthesizing unit configured to generate mosaic CH streaming data by synthesizing a plurality of streams having different subjects, a mosaic CH segment stream generating unit configured to generate a mosaic CH segment stream by delimiting the generated mosaic CH streaming data according to a timing in common with another mosaic channel, a unicast delivering unit configured to unicast-deliver the mosaic CH segment stream, a multicast delivering unit configured to multicast-deliver the mosaic CH segment stream, and a metafile generating unit configured to generate a metafile that is for a reception side to receive the mosaic CH segment stream that is unicast-delivered and multicast-delivered. The terminal device is configured to acquire the metafile, to receive and reproduce the mosaic CH segment stream that is unicast-delivered or multicast-delivered, and to receive and reproduce a stream corresponding to a selected area according to a user's operation of selecting the area of the mosaic CH segment stream disposed on a screen, based on the acquired metafile.

In the second aspect of the present disclosure, the metafile is acquired, the mosaic CH segment stream that is unicast-delivered or multicast-delivered is received and reproduced based on the acquired metafile, and a stream corresponding to a selected area is received and reproduced according to a user's operation of selecting the area of the mosaic CH segment stream on a screen.

According to a third aspect of the present disclosure, there is provided content supply system including: a content supply device configured to supply content as a mosaic channel; and a terminal device configured to receive and reproduce the content delivered from the content supply device. The content supply device includes a synthesizing unit configured to generate mosaic CH streaming data by synthesizing a plurality of streams having different subjects, a mosaic CH segment stream generating unit configured to generate a mosaic CH segment stream by delimiting the generated mosaic CH streaming data according to a timing in common with another mosaic channel, a unicast delivering unit configured to unicast-deliver the mosaic CH segment stream, a multicast delivering unit configured to multicast-deliver the mosaic CH segment stream, and a metafile generating unit configured to generate a metafile that is for the terminal device to receive the mosaic CH segment stream that is unicast-delivered and multicast-delivered. The terminal device is configured to acquire the metafile, to receive and reproduce the mosaic CH segment stream that is unicast-delivered or multicast-delivered, and to receive and reproduce a stream corresponding to a selected area according to a user's operation of selecting the area of the mosaic CH segment stream disposed on a screen, based on the acquired metafile.

In the third aspect of the present disclosure, the content supply device generates mosaic CH streaming data by synthesizing a plurality of streams having different subjects, generates a mosaic CH segment stream by delimiting the generated mosaic CH streaming data according to a timing in common with another mosaic channel, unicast-delivers the mosaic CH segment stream, and multicast-delivers the mosaic CH segment stream. The content supply device generates a metafile that is for a reception side to receive the mosaic CH segment stream that is unicast-delivered and multicast-delivered. The terminal device acquires the metafile, receives and reproduces the mosaic CH segment stream that is unicast-delivered or multicast-delivered based on the acquired metafile, and receives and reproduces a stream corresponding to a selected area according to a user's operation of selecting the area of the mosaic CH segment stream on a screen.

### Advantageous Effects of Invention

According to the first to third aspects of the present disclosure, it is possible to rapidly check a plurality of pieces of content delivered through a plurality of channels.

### Brief Description of Drawings

[FIG. 1] FIG. 1 is a block diagram illustrating an example of a configuration of a content supply system of the related art.
[FIG. 2] FIG. 2 is a diagram for describing a delay occurring due to switching between channels.
[FIG. 3] FIG. 3 is a diagram for describing a delay occurring due to switching between channels.
[FIG. 4] FIG. 4 is a diagram illustrating an exemplary synthesis of mosaic channels.
[FIG. 5] FIG. 5 is a diagram for describing switching between mosaic channels.
[FIG. 6] FIG. 6 is a block diagram illustrating an exemplary configuration of a content supply system to which the present disclosure is applied.
[FIG. 7] FIG. 7 is a diagram illustrating the flow of data at the time of zapping (at the time of mosaic channel viewing).
[FIG. 8] FIG. 8 is a diagram illustrating an arrangement of a USD in MBMS.
[FIG. 9] FIG. 9 is a diagram illustrating an arrangement of an ESG in DVB-H (IPDC).
[FIG. 10] FIG. 10 is a diagram illustrating an example in which an MPD is described in an XML format.
[FIG. 11] FIG. 11 is a diagram illustrating an example in which an extended MPD is described in an XML format.
[FIG. 12] FIG. 12 is a diagram illustrating an exemplary extended HTML inclusion type mosaic CH MPD.
[FIG. 13] FIG. 13 is a diagram illustrating an exemplary extended HTML inclusion type mosaic CH MPD.
[FIG. 14] FIG. 14 is a diagram illustrating an exemplary file of an extended HTML element.
[FIG. 15] FIG. 15 is a diagram for specifically describing the details of an extended HTML element.
[FIG. 16] FIG. 16 is a flowchart for describing a process of a mosaic CH device.
[FIG. 17] FIG. 17 is a flowchart for describing a series of processes of a content supply system.
[FIG. 18] FIG. 18 is a flowchart for describing a series of processes of a content supply system.
[FIG. 19] FIG. 19 is a flowchart for describing a series of processes of a content supply system.
[FIG. 20] FIG. 20 is a block diagram illustrating an exemplary configuration of a computer.

### Description of Embodiments

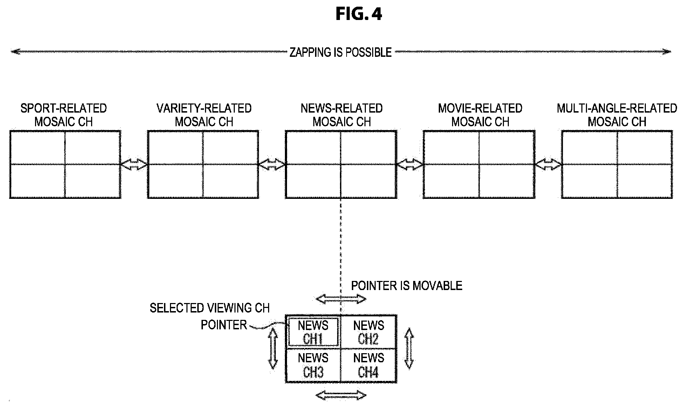

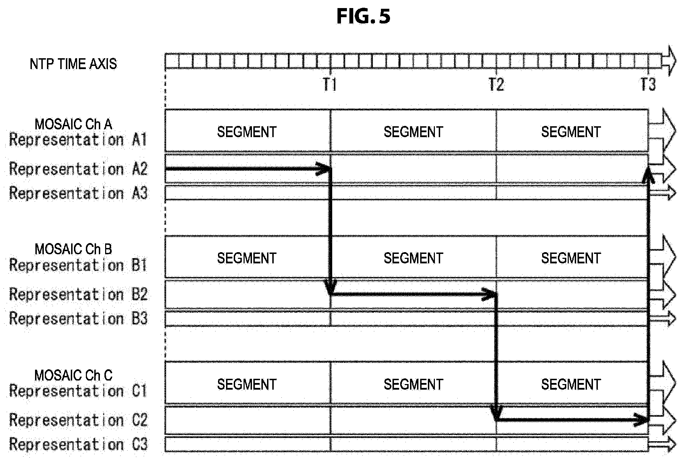

Hereinafter, preferred modes (hereinafter, referred to as "embodiments") for carrying out the present disclosure will be described, and an overview of the present disclosure will be first described with reference to FIGS. 4 and 5.

FIG. 4 illustrates a display example of a screen of a mosaic channel (CH) delivered by a mosaic CH device of a content supply system according to an embodiment of the present disclosure.

The mosaic channel is used to deliver a mosaic CH stream, and the mosaic CH stream is one in which videos of a plurality of pieces of content delivered from normal channels (hereinafter, also referred to as "viewing channels") are synthesized. The screen of the mosaic channel is equally divided into a plurality of areas, and videos of different content are displayed on the respective areas.

Thus, it is possible to simultaneously check a plurality of videos through the screen of the mosaic channel.

In the present embodiment, the mosaic CH stream is configured such that video streams of four pieces of different content are synthesized, but the number of video streams configuring the mosaic CH stream is not limited to 4 and may be, for example, 6 (=3x2 or 2x3) or 9 (=3x3).

The mosaic CH stream of each mosaic channel is configured such that video streams of a plurality of pieces of content grouped according to a genre (sport-related, variety-related, news-related, movie-related, or the like) are synthesized

A mosaic CH stream of a multi-angle-related mosaic channel may be configured such that a plurality of different video streams (for example, a plurality of videos obtained by capturing an imaging target such as a concert hall or the like at a plurality of different positions or a plurality of videos obtained by capturing in different directions at one position) that are delivered as single content and selectable by a reception side are synthesized.

At a side at which the mosaic channel is received and reproduced, it is possible to simultaneously check a plurality of videos on the screen of the mosaic channel. For example, it is possible to perform zapping between the mosaic channels according to an operation of a channel-up or -down button of a remote controller. Moreover, on the screen of the mosaic channel, for example, it is possible to move a pointer to be focused on any one of a plurality of areas on the screen according to an operation of a left, right, up, or down button of a remote controller, and it is possible to select a focused area by an operation of a selection button.

When a certain area on the screen of the mosaic channel is focused, a sound corresponding to a video displayed on the area is output. Further, when the area is selected, content that corresponds to the video displayed on the area and is delivered through a viewing channel is received and reproduced.

FIG. 5 illustrates an example of switching when zapping between the mosaic channels is performed.

FIG. 5 illustrates an example in which three segment streams (representations) having different bit rates are prepared through mosaic channels A, B, and C.

In the content supply system to which the present disclosure is applied, segment delimiters of the segment streams of the respective mosaic channels are synchronized with the NTP time axis, and a plurality of mosaic channels have the same segment length. Further, starting points (MPD/@availabilityStartTime+Period/@start) of media reproduction times at the heads of segments are set to be matched on the NTP time axis.

As the above setting is performed, when the reception side gives an instruction to perform switching to the representation B2 of the channel B before T1 on the DASH client time axis while viewing the representation A2 of the channel A, the switching is performed at T1 serving as both the segment delimiter of the representation A2 and the segment delimiter of the representation B2.

Further, when the reception side gives an instruction to perform switching to the representation C2 of the channel C before T2 while viewing the representation B2 of the channel B, the switching is performed at T2 serving as both the segment delimiter of the representation B2 and the segment delimiter of the representation C2. Moreover, when the reception side gives an instruction to perform switching to the representation A2 of the channel A before T3 while viewing the representation C2 of the channel C, the switching is performed at T3 serving as both the segment delimiter of the representation C2 and the segment delimiter of the representation A2.

As a result, it is possible to perform zapping among a plurality of mosaic channels while suppressing the occurrence of an extra delay.

In the present embodiment, the mosaic CH stream of the mosaic channel, the viewing CH stream of the viewing channel, and the MPDs used to receive the mosaic CH stream and the viewing CH stream are supplied through not only HTTP-unicast delivery but also multicast delivery performed via a broadcasting network in which communication quality is guaranteed.

Specifically, the MPD is supplied through HTTP-unicast delivery, UPD-multicast delivery, and FLUTE-multicast delivery. The mosaic CH stream and the viewing CH stream are supplied through the HTTP-unicast delivery, the FLUTE-multicast delivery, and the RTP-multicast delivery.

Further, when the reception side receives and reproduces the mosaic channel, the reception side receives and reproduces the multicast-delivered mosaic CH stream using the MPD that is multicast-delivered whenever possible. When this is difficult, the reception side receives and reproduces the multicast-delivered streaming data using the HTTP-unicast-delivered MPD. When this is also difficult, the reception side receives and reproduces the HTTP-unicast-delivered streaming data using the HTTP-unicast-delivered MPD. As a result, it is possible to suppress a situation in which an excessive load is put on the Internet and service quality also deteriorates.

### [Exemplary configuration of content supply system]

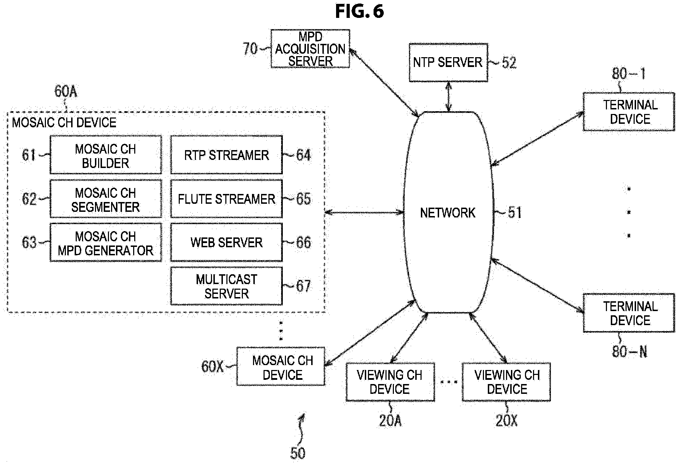

FIG. 6 illustrates an exemplary configuration of a content supply system according to an embodiment of the present disclosure.

The content supply system 50 includes a plurality of viewing CH devices 20 that deliver the viewing channel, a plurality of mosaic CH devices 60 that deliver the mosaic channel, an MPD acquisition portal 70, and a plurality of terminal devices 80. The viewing CH device 20 corresponds to a viewing channel A, and the mosaic CH device 60A corresponds to a mosaic channel A. The number of viewing CH devices 20 and the number of mosaic CH devices 60 need not be the same, and the number of mosaic CH devices 60 may be smaller than the number of viewing CH devices 20.

The network 51 includes various broadcasting networks using terrestrial broadcasting waves, satellite broadcasting waves, a mobile broadcasting (e)MBMS, or the like in addition to a two-way communication network represented by the Internet and the CDN using the Internet.

An NTP server 52 that provides system time information according to a UTC time format is disposed on the network 51. The NTP server 52 can supply the system time information to the viewing CH devices 20, the mosaic CH devices 60, the terminal devices 80, and the like. The viewing CH devices 20, the mosaic CH devices 60, and the terminal devices 80 are assumed to operate in a state in which system time is synchronized with the NTP time axis according to the system time information provided from the NTP server 52.

The viewing CH device 20 has a similar configuration to that illustrated in FIG. 1. The viewing CH device 20 of FIG. 1 supplies the segment stream and the MPD to the reception side through only the unicast delivery, but in the content supply system 50, the segment stream and the MPD may be supplied through not only the unicast delivery but also the multicast delivery.

The mosaic CH device 60 includes a mosaic CH builder 61, a mosaic CH segmenter 62, a mosaic CH MPD generator 63, a RTP streamer 64, a FLUTE streamer 65, a web server 66, and a multicast server 67.

The mosaic CH builder 61 to the multicast server 67 installed in the mosaic CH device 60 may be integratively arranged or may be distributedly arranged via the Internet or the like.

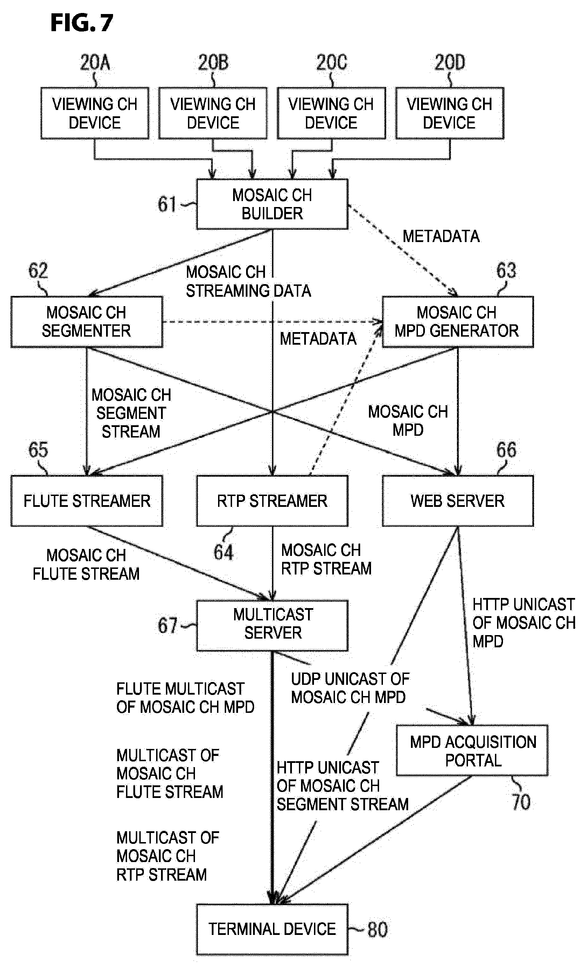

FIG. 7 illustrates the flow of various types of data among the mosaic CH builder 61 to the multicast server 67.

The mosaic CH builder 61 acquires streaming data of content that is delivered through the viewing channels by a plurality of viewing CH devices 20 (in the case of FIG. 7, the viewing CH devices 20A to 20D). Then, for example, the mosaic CH builder 61 generates the mosaic CH streaming data by performing a synthesis in a state in which content of the viewing channel A is arranged on the upper left of the screen, content of the viewing channel B is arranged on the upper right of the screen, content of the viewing channel C is arranged on the lower left of the screen, and content of the viewing channel D is arranged on the lower right of the screen. The mosaic CH builder 61 outputs the generated mosaic CH streaming data to the mosaic CH segmenter 62 and the RTP streamer 64. Moreover, the mosaic CH builder 61 acquires metadata (for example, the URL of the supply source of a segment stream) related to content that is delivered through the viewing channel from each viewing CH device 20, and supplies the acquired metadata to the mosaic CH MPD generator 63.

The mosaic CH segmenter 62 generates a mosaic CH segment stream such as a fragmented MP4 by temporally delimiting the mosaic CH streaming data into periods and further dividing a period into segments, and outputs the generated mosaic CH segment stream to the FLUTE streamer 65 and the web server 66. The segment length of the mosaic CH segment stream is the same as that of the mosaic CH segment stream generated by the mosaic CH device 60 of another mosaic channel, and the segment delimiter is synchronized with the NTP time axis.

The mosaic CH segmenter 62 notifies the mosaic CH MPD generator 63 of metadata (for example, the URL of the web server 66 serving as the supply source of the file storing the mosaic CH segment stream) of the generated mosaic CH segment stream.

The mosaic CH MPD generator 63 generates an MPD (hereinafter, referred to as a "mosaic CH MPD") that is extended for the mosaic CH and necessary when the terminal device 80 receives the mosaic CH segment stream or a mosaic CH RTP stream (which will be described below), and outputs the generated MPD to the FLUTE streamer 65 and the web server 66.

The RTP streamer 64 generates the mosaic CH RTP stream by storing the mosaic CH streaming data input from the mosaic CH builder 61 in an RTP packet, and outputs the mosaic CH RTP stream to the multicast server 67. The RTP streamer 64 notifies the mosaic CH MPD generator 63 of metadata of the mosaic CH RTP stream.

The FLUTE streamer 65 generates a mosaic CH FLUTE stream by storing the mosaic CH segment stream input from the mosaic CH segmenter 62 in a FLUTE packet, and outputs the generated mosaic CH FLUTE stream to the multicast server 67. The FLUTE streamer 65 outputs the mosaic CH MPD input from the mosaic CH MPD generator 63 to the multicast server 67.

The web server 66 HTTP-unicast-delivers the mosaic CH MPD to the request source according to the request (the HTTP request) from the MPD acquisition portal 70 or the terminal device 80. Further, the web server 66 HTTP-unicast-delivers the mosaic CH segment stream to the request source according to the request (the HTTP request) from the terminal device 80.

The multicast server 67 FLUTE-multicast-delivers and UDP-multicast-delivers the mosaic CH MPD. Further, the multicast server 67 FLUTE-multicast-delivers the mosaic CH FLUTE stream. Further, the multicast server 67 RTP-multicast-delivers the mosaic CH RTP stream.

Referring back to FIG. 6, the MPD acquisition portal 70 crawls the mosaic CH devices 60 according to the query API requesting the mosaic CH MPD from the terminal device 80, collects the mosaic CH MPDs, and transmits the collected mosaic CH MPDs to the terminal device 80. When no mosaic CH MPD is generated by the mosaic CH devices 60, an MPD satisfying a predetermined condition (which will be described below) is collected and transmitted to the terminal device 80. Furthermore, the MPD acquisition portal 70 crawls the viewing CH devices 20 according to the query API requesting the viewing MPD from the terminal device 80, collects the MPDs, and transmits the collected MPDs to the terminal device 80.

The terminal device 80 is connected to the viewing CH device 20 or the mosaic CH device 60 via the network 51. When zapping between the mosaic channels is performed, the terminal device 80 acquires the mosaic CH MPD that is multicast-delivered whenever possible, and receives and reproduces the mosaic CH FLUTE stream or the mosaic CH RTP stream that is multicast-delivered whenever possible based on the acquired mosaic CH MPD. When this is difficult, the terminal device 80 acquires the mosaic CH MPD that is HTTP-unicast-delivered, and receives and reproduces the mosaic CH FLUTE stream or the mosaic CH RTP stream that is multicast-delivered. When this is also difficult, the terminal device 80 receives and reproduces the mosaic CH segment stream that is HTTP-unicast-delivered using the mosaic CH MPD that is HTTP-unicast-delivered.

Further, when the terminal device 80 knows the address of the acquisition destination of the mosaic CH MPD or the viewing MPD, the terminal device 80 can acquire the mosaic CH MPD or the viewing MPD directly without using the MPD acquisition portal 70.

The terminal device 80 references the mosaic CH MPD when receiving the mosaic CH segment stream or the mosaic CH RTP stream. Further, the terminal device 80 references announcement information in which a portal channel of the multicast server 67 performing the FLUTE-multicast delivery is described when receiving the mosaic CH MPD or the mosaic CH FLUTE stream which is FLUTE-multicast-delivered.

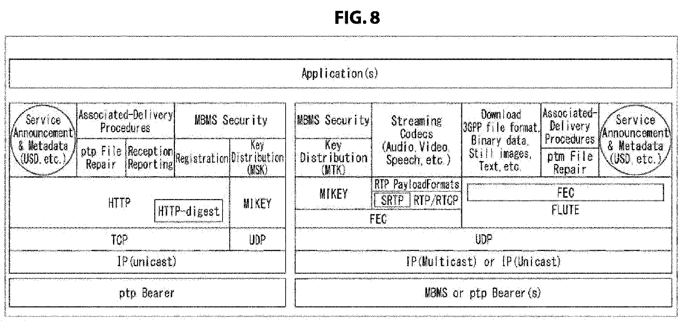

The announcement information is known through an interaction channel or a broadcast/multicast channel, for example, by a user service description (USD) in the MBMS when the FLUTE-multicast delivery is performed through the mobile broadcasting (e)MBMS included in the network 51. FIG. 8 illustrates an arrangement of the USD in the MBMS.

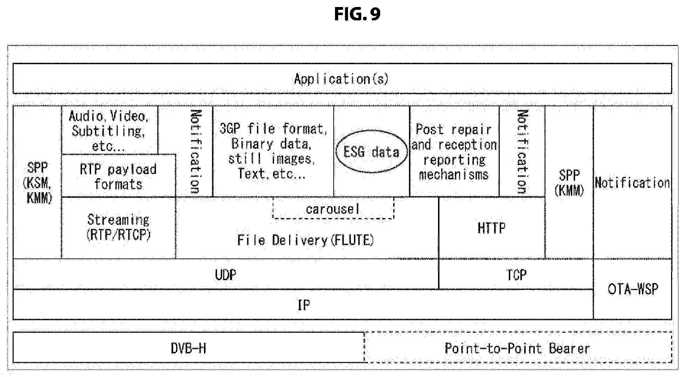

Further, when the FLUTE-multicast delivery is performed through the terrestrial broadcasting waves or the satellite broadcasting included in the network 51, the announcement information is known through the interaction channel or the broadcast/multicast channel, for example, by an electronic service guide (ESG) of DVB-H (IPDC). FIG. 9 illustrates an arrangement of the ESG in the DVB-H (IPDC).

The announcement information may be managed by the MPD acquisition portal 70, and the MPD acquisition portal 70 may notify the request source of the announcement information according to the request from the terminal device 80.

### [Extension of MPD]

Next, the MPD in the DASH and an extension thereof will be described.

In the MPD, information related to content (Media) is divided into units of periods. In each period, a plurality of representations including information related to streaming data of the same subject that differs in image quality or an angle of view size and differs in a stream attribute such as a bit rate are prepared. The representation stores information related to a segment obtained by further temporally dividing a period.

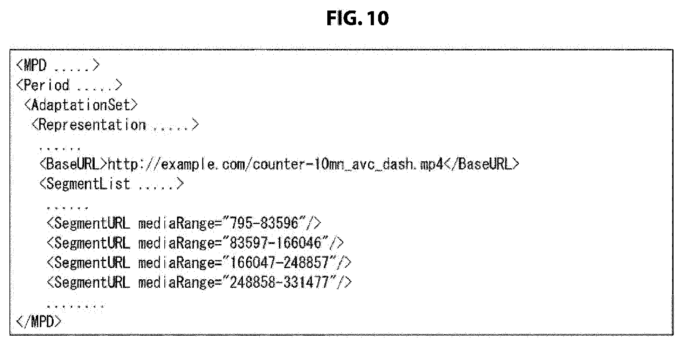

FIG. 10 illustrates an example in which the structure below the representation is described in an XML format.

In FIG. 8, "http://example.com/counter-10mn_avc_dash.mp4" described in MPD/Period/AdaptationSet/Representation/BaseURL indicates the address of the supply source of the file into which a plurality of segments are collectively converted.

Further, MPD/Period/AdaptationSet/Representation/SegmentList/SegmentURL/@mediaRang e indicates a byte range of the segmented streaming data in the file.

For example, MPD/Period/AdaptationSet/Representation/SegmentList/SegmentURL/@mediaRang e="795-83596" indicates that the byte range of a 795-th byte to an 83596-th byte in the file is first segmented streaming data.

Thus, when the terminal device 80 acquires the first segmented streaming data, it is desirable to designate a mediaRange "795-83596" to a range header together with a url "http://example.com/counter-10mn_avc_dash.mp4" of the file and issue an HTTP request. At this time, the HTTP request is as follows:
GET/counter-10mn_avc_dash.mp4 HTTP/1.1
Host: example.com
Range: bytes=795-83596

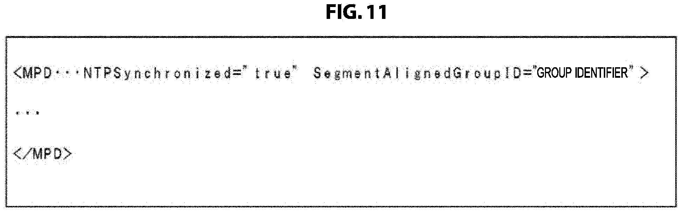

FIG. 11 illustrates an example in which a structure below the MPD extended as the mosaic CH MPD of the mosaic channel that can be zapped is described in an XML format.

In other words, in the extended MPD, an MPD/@NTPSynchronized (a boolean type, and a value is true/false) attribute and an MPD/@SegmentAlignedGroupID (group identifier) attribute are newly introduced below the MPD.

True or false indicating whether or not the segment delimiter of the segment stream for the MPD is in synchronization with the NTP time axis is described in the MPD/@NTPSynchronized attribute. In this case, since the mosaic CH segmenter 62 operates in synchronization with the NTP time axis, the segment delimiters are matched on the NTP time axis. Thus, the value of the synchronous MPD/@NTPSynchronized attribute is true.

An identifier of a group (in this case, a group of mosaic channels among all channels) to which channels in which the segment delimiters of the segment stream are matched is described in the MPD/@SegmentAlignedGroupID attribute.

Thus, the MPD acquisition portal 70 preferably collects the MPD (the mosaic CH MPD) in which the MPD/@NTPSynchronized attribute is true, the MPD/@SegmentAlignedGroupID attribute is the same group identifier, and a mosaic element (which will be described below) is included when the mosaic CH MPD is requested from the terminal device 80.

Although not illustrated, in the mosaic CH MPD, within the group to which the channels of the content supply devices 60 belong, the starting points (MPD/@availabilityStartTime+Period/@start) of the media reproduction times at the heads of the segments are matched on the NTP time axis.

At least one of a segmentBase/@duration attribute storing a value indicating the segment length and an MPD/@maxSegmentDuration attribute storing a value indicating the largest segment length is mandatorily described in the mosaic CH MPD. When one of them is described, if the MPD/@NTPSynchronized attribute and the MPD/@SegmentAlignedGroupID attribute are not described, an MPD corresponding to the mosaic channel for the mosaic CH can be collected. Specifically, for example, when the terminal device 80 requests the MPD acquisition portal 70 to transmit the MPD through the following query API, an MPD of a segment length (an expected segment length) satisfying a predetermined condition can be collected. In the following example, the segment length of 2 seconds or less is used as the expected segment length.
Http://MPDPortal.com/getMPD?expectedSegmentSizeLimit="PT2S"

Between the mosaic channels corresponding to the collected MPD corresponding to the expected segment length, since the segment length is a relatively short time (2 seconds in the above example), the rapid zapping is possible.

Instead of introducing the MPD/@NTPSynchronized attribute and the MPD/@SegmentAlignedGroupID attribute, an MPD/forZapping (a boolean type, and a value is true/false) attribute indicating whether or not the corresponding MPD is the mosaic CH MPD corresponding to the mosaic channel that can be zapped may be introduced.

A ServiceLocation element is newly introduced in the MPD so that seamless switching between the HTTP-unicast-delivered mosaic CH segment stream and the RTP-multicast-delivered mosaic CH RTP stream can be performed. Further, an rtspRange attribute indicating an interval of a mosaic CH RTP stream that is multicast-transmitted and corresponds to a byte range of a segment that is HTTP-unicast-transmitted is introduced.

The rtspRange attribute specifies an interval of a mosaic CH RTP stream that is multicast-delivered and serves as a switching target of a mosaic CH segment stream that is HTTP-unicast-delivered, and is arranged in a SegmentURL element. The rtspRange attribute stores a character string of a format (a UTC format) of a range parameter identifying an RTP stream interval defined in a real time streaming protocol (RTSP) used for control of RTP streaming specified in a request for comment (RFC) 2326. The format of information stored in the rtspRange attribute is not limited to the UTC format.

A ServiceLocationAttributeUrl attribute in which a url of a ServiceLocationAttribute file storing the ServiceLocation element as a root element is arranged in a BaseURL of the MPD.

The ServiceLocation element includes a tuning parameter (DeliverySystemAttributes) and an IP multicast address (IPMulticastAddress).

For example, when a multicast bearer or a broadcast bearer of a mobile network such as the MBMS is used, a format identifier (ID_MBMS in the case of the MBMS) of a data structure of a tuning parameter employed in multicast transmission or broadcast transmission by the MBMS or the like is described in DeliverySystemIdentifier of DeliverySystemAttributes.

Further, for example, when a broadcast bearer of the existing television broadcasting network such as the DVB terrestrial network is used, a format identifier (ID_DVB_T in the case of the DVB terrestrial network) of a data structure of a tuning parameter employed in broadcast transmission of the DVB terrestrial network is described.

A data structure (a parameter) corresponding to a delivery form identified by DeliverySystemIdentifier is described in DeliverySystemDescriptor of DeliverySystemAttributes.

In the mosaic CH MPD, a mosaic element is introduced below AdaptationSet (or Representation) corresponding to the mosaic CH stream.

The details of the mosaic element is described by an extended HTML element in the mosaic CH MPD or described by an extended HTML element as a separate file from the mosaic CH MPD, and a reference (URL) of the file is described in the mosaic element. Hereinafter, the former mosaic CH MPD is referred to as an "extended HTML inclusion type mosaic CH MPD," and the latter mosaic CH MPD is referred to as an "extended HTML reference type mosaic CH MPD."

Instead of using the extended HTML element, a synchronized multimedia integration language (SMIL) may be used.

In the extended HTML element in which the details of the mosaic element are described, in a div element of the HTML, a reference to a control target element is designated by xlink: a type attribute (a value "simple") and xlink: a href attribute so that a reference attribute to an AdaptationSet element, a Representation element, or a SubRepresentation element within the mosaic CH MPD serving as a control description target can be designated. When a channel corresponding to an area designated in the div element is finally determined and selected, it indicates an address of a viewing stream to be switched. Further, when the reference to the control target element is designated by xlink: an actuate attribute (a value "onLoad") and xlink: a type attribute (a value "simple"), if a focus moves to an area designated in the div element (movement of a simple pointer different from a channel selection determination operation), it indicates an address of a stream to be switched.

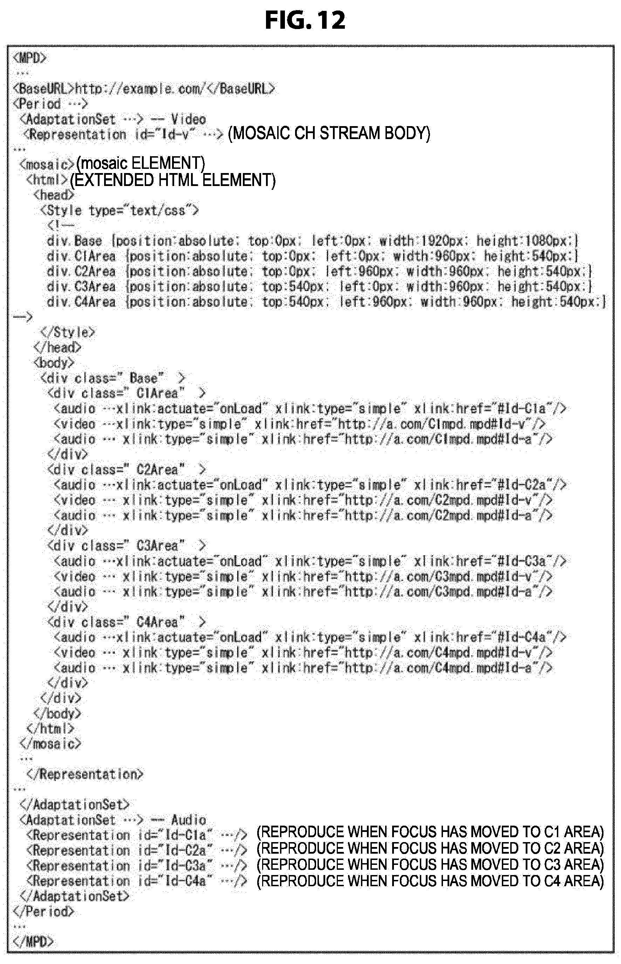

FIG. 12 illustrates an exemplary extended HTML inclusion type mosaic CH MPD.

As illustrated in FIG. 12, the presence of the mosaic element in the MPD indicates that the MPD is the mosaic CH MPD. In the div element of the extended HTML element, information related to an area of the mosaic CH stream disposed on the screen is described.

A reference to an audio stream output when a focus moves to each area and references to a video stream and an audio stream for viewing to be received and reproduced when each area is selected are described in a body element.

In the case of FIG. 12, the reference to the audio stream output when the focus moves to each area is designated within the mosaic CH MPD. As the references to the video stream and the audio stream for viewing to be received and reproduced when each area is selected, the viewing MPD different from the mosaic CH MPD is designated. However, the references to the video stream and the audio stream for viewing to be received and reproduced when each area is selected are not limited to the viewing MPD.

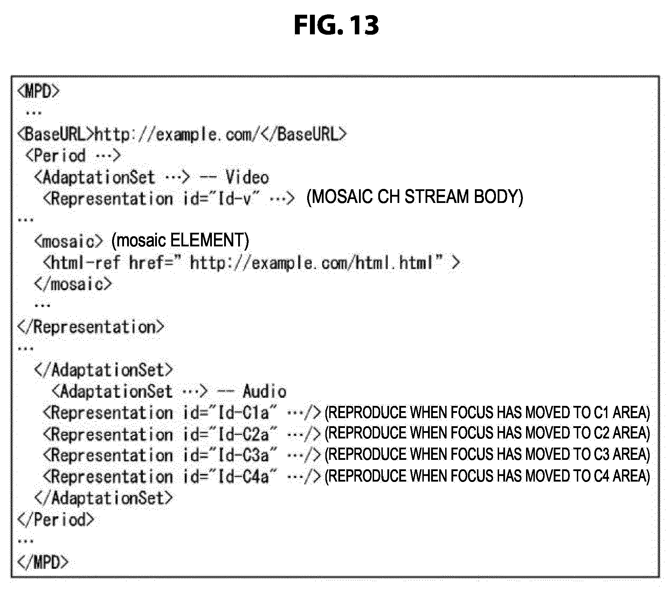

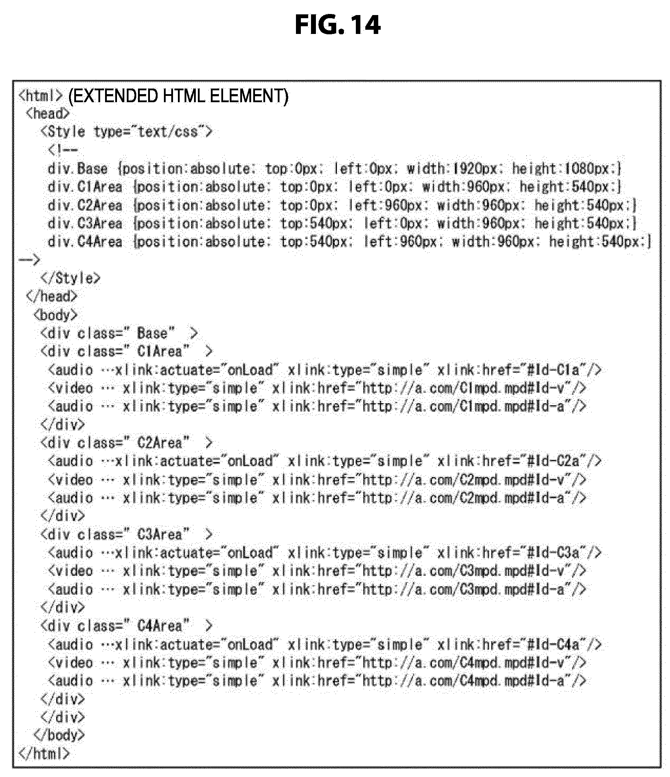

FIG. 13 illustrates an exemplary extended HTML reference type mosaic CH MPD. FIG. 14 illustrates an exemplary file of the extended HTML element present as a separate file from the mosaic CH MPD.

A reference of the extended HTML element present as a separate file is described in the mosaic element illustrated in FIG. 13. A similar content to the extended HTML element illustrated in FIG. 12 is described in the extended HTML element of FIG. 14.

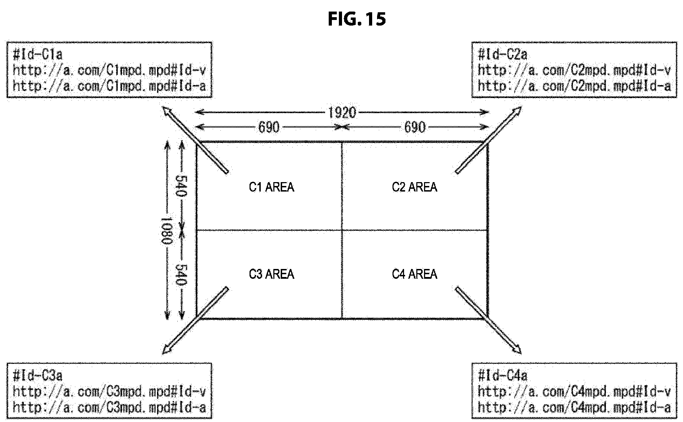

FIG. 15 specifically illustrates the details of the extended HTML element illustrated in FIG. 12 or FIG. 14. In other words, in the extended HTML element, in the div element, the entire screen of 1920 pixels x 1080 pixels is defined as a base, and the upper left area of the screen is defined as a C1 area, the upper right area is defined as a C2 area, the lower left area is defined as a C3 area, and the lower right area is defined as a C4 area.

When the entire screen, that is, the base is displayed, the extended HTML element is described so that Id-C1a, Id-C2a, Id-C3a, and Id-C4a are simultaneously and respectively output as an audio stream corresponding to the C1 area, an audio stream corresponding to the C2 area, an audio stream corresponding to the C3 area, and an audio stream corresponding to the C4 area.

However, in the terminal device 80, instead of simultaneously outputting sounds corresponding to the four audio streams, through a function of a browser or the like, only Id-C1a is output in a state in which the C1 area is focused, only Id-C2a is output in a state in which the C2 area is focused, only Id-C3a is output in a state in which the C3 area is focused, and only Id-C4a is output in a state in which the C4 area is focused.

Further, when the C1 area is selected, a viewing video stream designated by http://a.com/C1mpd.mpd#1d-v and a viewing audio stream designated by http://a.com/C1mpd.mpd#1d-a are received and reproduced. When the C2 area is selected, a viewing video stream designated by http://a.com/C2mpd.mpd#1d-v and a viewing audio stream designated by http://a.com/C2mpd.mpd#1d-a are received and reproduced. When the C3 area is selected, a viewing video stream designated by http://a.com/C3mpd.mpd#1d-v and a viewing audio stream designated by http://a.com/C3mpd.mpd#1d-a are received and reproduced. When the C4 area is selected, a viewing video stream designated by http://a.com/C4mpd.mpd#1d-v and a viewing audio stream designated by http://a.com/C4mpd.mpd#1d-a are received and reproduced.

### [Operation of content supply system 50]

### Next, an operation of the content supply system 50 will be described.

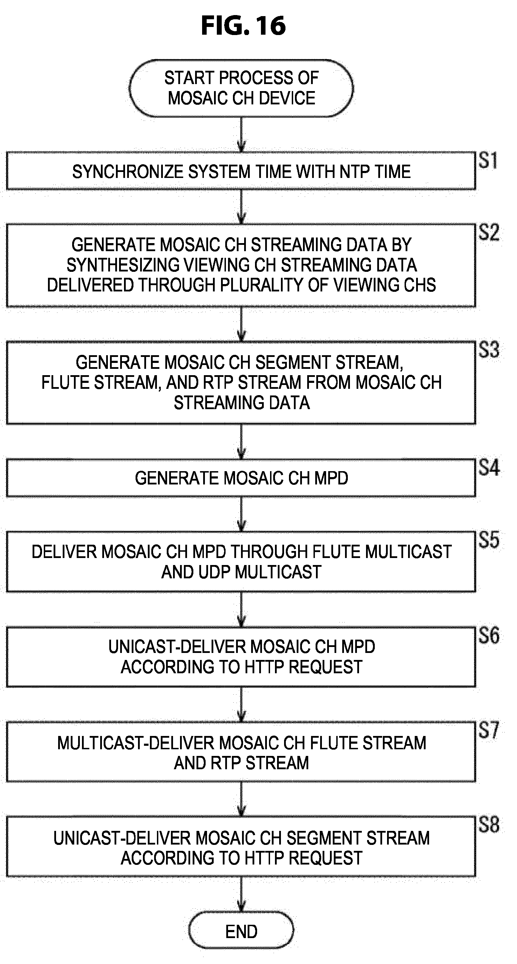

FIG. 16 is a flowchart for describing a process performed by each mosaic CH device 60 in order to deliver the mosaic CH stream.

In step S1, the mosaic CH device 60 synchronizes its system time with the NTP time axis according to the system time information provided from the NTP server 52. As a result, the mosaic CH segmenter 62 of the mosaic CH device 60 and the like operate in synchronization with the NTP time axis.

In step S2, the mosaic CH builder 61 acquires streaming data of content (or source data thereof) that is delivered by a plurality of viewing CH devices 20 (the four viewing CH devices 20 in the present embodiment) as the viewing channel, and generates the mosaic CH streaming data by synthesizing the acquired streaming data into one screen. Further, the mosaic CH builder 61 outputs the generated mosaic CH streaming data to the mosaic CH segmenter 62 and the RTP streamer 64. Furthermore, the mosaic CH builder 61 acquires metadata of content that is delivered from the viewing channel by the plurality of viewing CH devices 20, and supplies the acquired metadata to the mosaic CH MPD generator 63.

In step S3, the mosaic CH segmenter 62 generates the mosaic CH segment stream such as a fragmented MP4 by temporally delimiting the mosaic CH streaming data input from the mosaic CH builder 61 into periods and further dividing a period into segments, and outputs the generated mosaic CH segment stream to the FLUTE streamer 65 and the web server 66. Further, the mosaic CH segmenter 62 notifies the mosaic CH MPD generator 63 of metadata of the generated mosaic CH segment stream.

The FLUTE streamer 65 generates the mosaic CH segment stream by storing the mosaic CH streaming data input from the mosaic CH segmenter 62 in the FLUTE packet, and outputs the mosaic CH FLUTE stream to the multicast server 67.

The RTP streamer 64 generates the mosaic CH RTP stream by storing the mosaic CH streaming data input from the mosaic CH builder 61 in the RTP packet, and outputs the mosaic CH RTP stream to the multicast server 67. Further, the RTP streamer 64 notifies the mosaic CH MPD generator 63 of metadata of the mosaic CH RTP stream.

In step S4, the mosaic CH MPD generator 63 generates the mosaic CH MPD based on the notification of metadata, and outputs the mosaic CH MPD to the FLUTE streamer 65 and the web server 66.

In step S5, the FLUTE streamer 65 outputs the mosaic CH MPD input from the mosaic CH MPD generator 63 to the multicast server 67. The multicast server 67 FLUTE-multicast-delivers and UDP-multicast-delivers (overlay-multicast-delivers, and the like) the mosaic CH MPD.

In step S6, when there is the request (the HTTP request) from the MPD acquisition portal 70 or the terminal device 80, the web server 66 HTTP-unicast-delivers the mosaic CH MPD to the request source in response to the request.

In step S7, the multicast server 67 FLUTE-multicast-delivers a mosaic CH FLUTE stream, and RTP-multicast-delivers a mosaic CH RTP stream.

In step S8, when there is the request (the HTTP request) from the terminal device 80, the web server 66 HTTP-unicast-delivers the mosaic CH segment stream to the request source in response to the request. Thus, the description of the process performed by the mosaic CH device 60 is now finished.

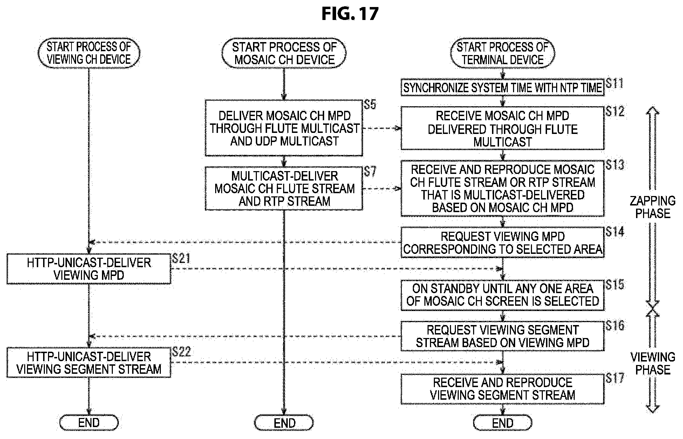

Next, a series of processes of the content supply system 50 until the terminal device 80 transitions to a viewing phase in which the viewing CH is received and reproduced through a zapping phase in which the mosaic CHs are switched one after another (hereinafter referred to as a series of processes) will be described with reference to FIGS. 17 to 19.

FIG. 17 is a flowchart corresponding to a case in which the terminal device 80 can receive the mosaic CH MPD that is multicast-delivered, and receive and reproduce the mosaic CH FLUTE stream or RTP stream that is multicast-delivered.

A method of receiving the viewing MPD and the viewing stream from the viewing CH device 20 is arbitrary, but since the HTTP-unicast-delivered viewing stream commonly has high image quality (a high bit rate), the viewing stream that is HTTP-unicast-delivered is received whenever possible.

In step S11, the terminal device 80 synchronizes its system time with the NTP time axis according to the system time information provided from the NTP server 52. In step S12, the terminal device 80 receives the mosaic CH MPD that is FLUTE-multicast-delivered as the process of step S5 of FIG. 16. Further, instead of receiving the mosaic CH MPD, a request for the mosaic CH MPD may be transmitted to the MPD acquisition portal 70. The terminal device 80 that has received the mosaic CH MPD enters the zapping phase.

In step S13, the terminal device 80 receives and reproduces the mosaic CH FLUTE stream that is FLUTE-multicast-delivered or the mosaic CH RTP stream that is RTP-multicast-delivered as the process of step S7 of FIG. 16 based on the mosaic CH MPD.

During the zapping phase, the terminal device 80 can perform the rapid zapping between mosaic channels by appropriately repeating the process of step S13.

The terminal device 80 acquires the viewing MPDs of a plurality of viewing channels configuring the mosaic channel that is being received and reproduced during the zapping phase. Specifically, in step S14, the terminal device 80 requests the viewing CH devices 20 corresponding to the plurality of viewing channels configuring the mosaic channel that is being received and reproduced to transmit the viewing MPD, and receives the viewing MPD that is HTTP-unicast-delivered as the process of step S21 in response to the request.

In step S15, the terminal device 80 is on standby until any one area on the screen of the mosaic channel is selected during the zapping phase. Then, when any one area on the screen of the mosaic channel is selected, the terminal device 80 transitions to the viewing phase.

In step S16, the terminal device 80 that has transitioned to the viewing phase analyzes the extended HTML element of the mosaic CH MPD, and requests the corresponding viewing CH device 20 to transmit the viewing segment stream based on the viewing MPD associated with the selected area. In step S17, the terminal device 80 receives and reproduces the viewing segment stream that is HTTP-unicast-delivered as the process of step S22 in response to the request.

Thereafter, the terminal device 80 can return to the zapping phase from the viewing phase and then transition to the viewing phase again. Thus, the description of the series of processes is now finished. According to the series of process described above, it is possible to rapidly perform zapping between the mosaic channels and rapidly transition from the screen of the mosaic channel to the screen of the viewing channel.

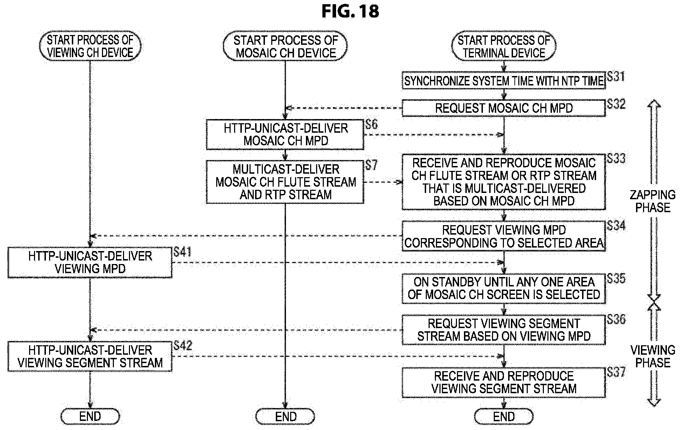

Next, FIG. 18 is a flowchart corresponding to a case in which the terminal device 80 can acquire the mosaic CH MPD that is HTTP-unicast-delivered, and receive and reproduce the mosaic CH FLUTE stream or RTP stream that is multicast-delivered.

A method of receiving the viewing MPD and the viewing stream is arbitrary, similarly to the example of FIG. 17, but since the HTTP-unicast-delivered viewing stream commonly has high image quality (a high bit rate), the viewing stream that is HTTP-unicast-delivered is received whenever possible.

In step S31, the terminal device 80 synchronizes its system time with the NTP time axis according to the system time information provided from the NTP server 52. In step S32, the terminal device 80 requests the web server 66 of each mosaic CH device 60 to transmit the mosaic CH MPD. The web server 66 HTTP-unicast-delivers the mosaic CH MPD to the MPD acquisition portal 70 as the process of step S6 of FIG. 16 in response to the request. The mosaic CH MPD is transmitted to the terminal device 80 of the request source.

The terminal device 80 may collect the mosaic CH MPD using the MPD acquisition portal 70. In this case, the MPD acquisition portal 70 is connected to the web server 66 of each mosaic CH device 60, and requests the web server 66 of each mosaic CH device 60 to transmit the mosaic CH MPD (the MPD in which the MPD/@NTPSynchronized attribute is true, and the MPD/@SegmentAlignedGroupID attribute is the same group identifier). Further, the MPD acquisition portal 70 may collect the mosaic CH MPD that is UDP-multicast-delivered.

The terminal device 80 that has received the mosaic CH MPD enters the zapping phase. In step S33, the terminal device 80 receives and reproduces the mosaic CH FLUTE stream that is FLUTE-multicast-delivered or the mosaic CH RTP stream that is RTP-multicast-delivered as the process of step S7 of FIG. 16 based on the mosaic CH MPD.

During the zapping phase, the terminal device 80 can perform the rapid zapping between the mosaic channels by appropriately repeating the process of step S33.

The terminal device 80 acquires the viewing MPDs of a plurality of viewing channels configuring the mosaic channel that is being received and reproduced during the zapping phase. Specifically, in step S34, the terminal device 80 requests the viewing CH devices 20 corresponding to a plurality of viewing channels configuring the mosaic channel that is being received and reproduced to transmit the viewing MPD, and receives the viewing MPD that is HTTP-unicast-delivered as the process of step S41 in response to the request.

In step S35, the terminal device 80 is on standby until any one area on the screen of the mosaic channel is selected during the zapping phase. Then, when any one area on the screen of the mosaic channel is selected, the terminal device 80 transitions to the viewing phase.

In step S36, the terminal device 80 that has transitioned to the viewing phase analyzes the extended HTML element of the mosaic CH MPD, and requests the corresponding viewing CH device 20 to transmit the viewing segment stream based on the viewing MPD associated with the selected area. In step S37, the terminal device 80 receives and reproduces the viewing segment stream that is HTTP-unicast-delivered as the process of step S42 in response to the request.

Thereafter, the terminal device 80 can return to the zapping phase from the viewing phase and then transition to the viewing phase again. Thus, the description of the series of processes is now finished. According to the series of process described above, it is possible to rapidly perform zapping between the mosaic channels and rapidly transition from the screen of the mosaic channel to the screen of the viewing channel.

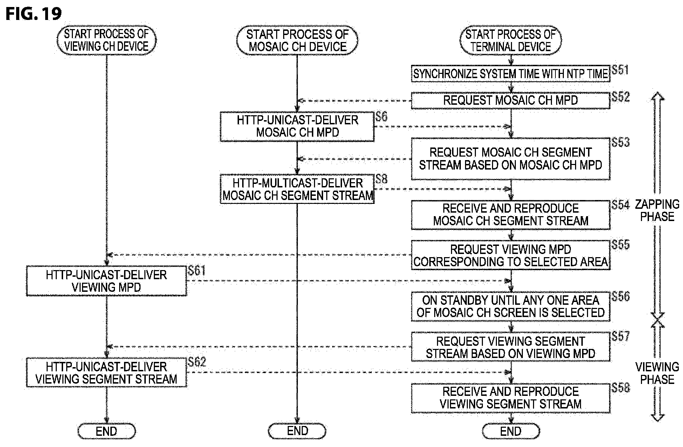

FIG. 19 is a flowchart corresponding to a case in which the terminal device 80 can acquire the mosaic CH MPD that is HTTP-unicast-delivered, and receive and reproduce the mosaic CH segment stream that is HTTP-unicast-delivered rather than the mosaic CH FLUTE stream or RTP stream that is multicast-delivered.

A method of receiving the viewing MPD and the viewing stream is arbitrary, similarly to the example of FIG. 17, but since the HTTP-unicast-delivered viewing stream commonly has high image quality (a high bit rate), the viewing stream that is HTTP-unicast-delivered is received whenever possible.

In step S51, the terminal device 80 synchronizes its system time with the NTP time axis according to the system time information provided from the NTP server 52. In step S52, the terminal device 80 requests the web server 66 of each mosaic CH device 60 to transmit the mosaic CH MPD. In response to the request, the web server 66 HTTP-unicast-delivers the mosaic CH MPD to the MPD acquisition portal 70 as the process of step S6 of FIG. 16. The mosaic CH MPD is transmitted to the terminal device 80 of the request source. The terminal device 80 may collect the mosaic CH MPD using the MPD acquisition portal 70. The terminal device 80 that has received the mosaic CH MPD enters the zapping phase.

In step S53, the terminal device 80 requests the web server 66 to transmit the mosaic CH segment stream based on the mosaic CH MPD. In response to the request, the web server 66 HTTP-unicast-delivers the mosaic CH segment stream to the terminal device 80 as the process of step S8 of FIG. 16.

In step S54, the terminal device 80 receives and reproduces the HTTP-unicast-delivered mosaic CH segment stream.

During the zapping phase, the terminal device 80 can perform the rapid zapping between the mosaic channels by appropriately repeating the process of step S53.

The terminal device 80 acquires the viewing MPDs of a plurality of viewing channels configuring the mosaic channel that is being received and reproduced during the zapping phase. Specifically, in step S55, the terminal device 80 requests the viewing CH devices 20 corresponding to a plurality of viewing channels configuring the mosaic channel that is being received and reproduced to transmit the viewing MPD, and receives the viewing MPD that is HTTP-unicast-delivered as the process of step S61 in response to the request.

In step S56, the terminal device 80 is on standby until any one area on the screen of the mosaic channel is selected during the zapping phase. Then, when any one area on the screen of the mosaic channel is selected, the terminal device 80 transitions to the viewing phase.

In step S57, the terminal device 80 that has transitioned to the viewing phase analyzes the extended HTML element of the mosaic CH MPD, and requests the corresponding viewing CH device 20 to transmit the viewing segment stream based on the viewing MPD associated with the selected area. In step S58, the terminal device 80 receives and reproduces the viewing segment stream that is HTTP-unicast-delivered as the process of step S62 in response to the request.

Thereafter, the terminal device 80 can return to the zapping phase from the viewing phase and then transition to the viewing phase again. Thus, the description of the series of processes is now finished. According to the series of process described above, it is possible to rapidly perform zapping between the mosaic channels and rapidly transition from the screen of the mosaic channel to the screen of the viewing channel.

In the above description, switching between channels in DASH is performed in units of segments, but switching between channels may be performed in units of sub segments obtained by subdividing the segments. In this case, preferably, an MPD/@SubSegmentDuration attribute storing a value indicating a sub segment length is mandatorily described in the mosaic CH MPD and the viewing MPD, and "segment" in the above description is replaced with "sub segment."

In the present embodiment, the terminal device 80 uses the mosaic CH MPD obtained by extending the MPD of the related art as the information necessary for receiving the mosaic channel, but may a HTML file instead as the mosaic CH MPD.

By the way, each of the mosaic CH device 60 and the terminal device 80 that execute a series of processes described above can be configured with hardware or can be implemented by executing software through a computer. Examples of the computer include a computer embedded in dedicated hardware and a general-purpose personal computer capable of installing various kinds of programs and executing various kinds of functions.

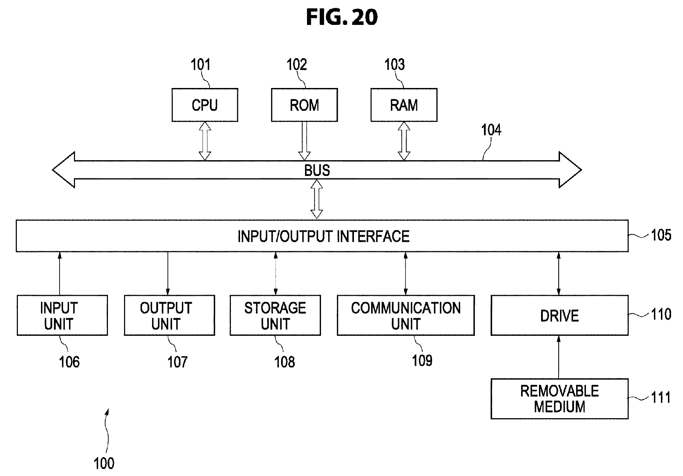

FIG. 20 is a block diagram illustrating an exemplary hardware configuration of the computer.

In a computer 100, a central processing unit (CPU) 101, a read only memory (ROM) 102, and a random access memory (RAM) 103 are connected with one another via a bus 104.

An input/output interface 105 is connected to the bus 104. An input unit 106, an output unit 107, a storage unit 108, a communication unit 109, and a drive 110 are connected to the input/output interface 105.

The input unit 106 includes a keyboard, a mouse, a microphone, and the like. The output unit 107 includes a display, a speaker, and the like. The storage unit 108 includes a hard disk, a non-volatile memory, and the like. The communication unit 109 includes a network interface. The drive 110 drives a removable medium 111 such as a magnetic disk, an optical disk, a magneto-optical disk, or a semiconductor memory.

In the computer 100 having the above-described configuration, for example, a series of processes described above are performed by loading a program stored in the storage unit 108 onto the RAM 103 through the input/output interface 105 and the bus 104 and executing the loaded program through the CPU 101.

For example, the program executed by the computer 100 (the CPU 101) may be recorded in the removable medium 111 serving as a package medium or the like and provided. The program may be provided via a wired or wireless transmission medium such as a local area network, the Internet, or digital satellite broadcasting.

In the computer 100, the removable medium 111 may be mounted on the drive 110, and the program may be installed in the storage unit 108 through the input/output interface 105. The program may be received by the communication unit 109 via a wired or wireless transmission medium and installed in the storage unit 108. Moreover, the program may be installed in the ROM 102 or the storage unit 108 in advance.

Further, the program executed by the computer 100 may be a program in which a process is chronologically performed according to the sequence described in the present specification or may be a program in which a process is performed in parallel or at a necessary timing, for example, when calling is performed.

An embodiment of the present disclosure is not limited to the above embodiments, and various changes can be made within the scope not departing from the gist of the present disclosure.

Additionally, the present technology may also be configured as below.
(1) A content supply device that supplies content as a mosaic channel, the content supply device including:
   a synthesizing unit configured to generate mosaic CH streaming data by synthesizing a plurality of streams having different subjects;
   a mosaic CH segment stream generating unit configured to generate a mosaic CH segment stream by delimiting the generated mosaic CH streaming data according to a timing in common with another mosaic channel;
   a unicast delivering unit configured to unicast-deliver the mosaic CH segment stream;
   a multicast delivering unit configured to multicast-deliver the mosaic CH segment stream; and
   a metafile generating unit configured to generate a metafile that is for a reception side to receive the mosaic CH segment stream that is unicast-delivered and multicast-delivered.
(2) The content supply device according to (1),
   wherein the metafile generating unit generates an extended MPD as the metafile.
(3) The content supply device according to (2),
   wherein the metafile generating unit generates the MPD including the MOSAIC element.
(4) The content supply device according to (3), wherein the metafile generating unit generates an extended HTML inclusion type mosaic CH MPD in which information of an area of the mosaic CH streaming data disposed on a screen and information of a stream corresponding to each area are described as the MOSAIC element.
(5) The content supply device according to (3),
   wherein the metafile generating unit generates an extended HTML reference type mosaic CH MPD in which information of an area of the mosaic CH streaming data disposed on a screen and a reference to a file which describes information of a stream corresponding to each area are described as the MOSAIC element.
(6) The content supply device according to any of (1) to (5),
   wherein the unicast delivering unit further unicast-delivers the metafile, and wherein the multicast delivering unit further multicast-delivers the metafile.
(7) The content supply device according to any of (1) to (6),
   wherein the unicast delivering unit HTTP-unicast-delivers the mosaic CH segment stream, and
   wherein the multicast delivering unit FLUTE-multicast-delivers a mosaic CH FLUTE stream based on the mosaic CH segment stream.
(8) The content supply device according to any of (1) to (7), further including:
   an RTP stream generating unit configured to generate a mosaic CH RTP stream, based on the mosaic CH streaming data,
   wherein the multicast delivering unit further RTP-multicast-delivers the mosaic CH RTP stream.
(9) The content supply device according to any of (1) to (8),
   wherein the mosaic CH segment stream generating unit generates the mosaic CH segment stream by aligning a head of a minimum unit of the mosaic CH segment stream with the other mosaic channel in synchronization with an NTP time axis and delimiting the mosaic CH stream into the minimum units according to a duration in common with the other mosaic channel.

### Reference Signs List

- 20: viewing CH device
- 50: content supply system
- 51: network
- 52: NTP server
- 60: mosaic CH device
- 61: mosaic CH builder
- 62: mosaic CH segmenter
- 63: mosaic CH MPD generator
- 64: RTP streamer
- 65: FLUTE streamer
- 66: web server
- 67: multicast server
- 70: MPD acquisition portal
- 80: terminal device
- 100: computer
- 101: CPU

## Claims

1. A content supply device that supplies content as a mosaic channel, the content supply device comprising:
a synthesizing unit configured to generate mosaic CH streaming data by synthesizing a plurality of streams having different subjects;
a mosaic CH segment stream generating unit configured to generate a mosaic CH segment stream by delimiting the generated mosaic CH streaming data according to a timing in common with another mosaic channel;
a unicast delivering unit configured to unicast-deliver the mosaic CH segment stream;
a multicast delivering unit configured to multicast-deliver the mosaic CH segment stream; and
a metafile generating unit configured to generate a metafile that is for a reception side to receive the mosaic CH segment stream that is unicast-delivered and multicast-delivered.

2. The content supply device according to claim 1,
wherein the metafile generating unit generates an extended MPD as the metafile.

3. The content supply device according to claim 2,
wherein the metafile generating unit generates the MPD including the MOSAIC element.

4. The content supply device according to claim 3,
wherein the metafile generating unit generates an extended HTML inclusion type mosaic CH MPD in which information of an area of the mosaic CH streaming data disposed on a screen and information of a stream corresponding to each area are described as the MOSAIC element.

5. The content supply device according to claim 3,
wherein the metafile generating unit generates an extended HTML reference type mosaic CH MPD in which information of an area of the mosaic CH streaming data disposed on a screen and a reference to a file which describes information of a stream corresponding to each area are described as the MOSAIC element.

6. The content supply device according to claim 2,
wherein the unicast delivering unit further unicast-delivers the metafile, and wherein the multicast delivering unit further multicast-delivers the metafile.

7. The content supply device according to claim 2,
wherein the unicast delivering unit HTTP-unicast-delivers the mosaic CH segment stream, and
wherein the multicast delivering unit FLUTE-multicast-delivers a mosaic CH FLUTE stream based on the mosaic CH segment stream.

8. The content supply device according to claim 7, further comprising:
an RTP stream generating unit configured to generate a mosaic CH RTP stream, based on the mosaic CH streaming data,
wherein the multicast delivering unit further RTP-multicast-delivers the mosaic CH RTP stream.

9. The content supply device according to claim 2,
wherein the mosaic CH segment stream generating unit generates the mosaic CH segment stream by aligning a head of a minimum unit of the mosaic CH segment stream with the other mosaic channel in synchronization with an NTP time axis and delimiting the mosaic CH stream into the minimum units according to a duration in common with the other mosaic channel.

10. A content supply method of a content supply device that supplies content as a mosaic channel, the content supply method comprising:
a synthesizing step of generating, by the content supply device, mosaic CH streaming data by synthesizing a plurality of streams having different subjects;
a mosaic CH segment stream generating step of generating, by the content supply device, a mosaic CH segment stream by delimiting the generated mosaic CH streaming data according to a timing in common with another mosaic channel;
a unicast delivering step of unicast-delivering, by the content supply device, the mosaic CH segment stream;
a multicast delivering step of multicast-delivering, by the content supply device, the mosaic CH segment stream; and
a metafile generating step of generating, by the content supply device, a metafile that is for a reception side to receive the mosaic CH segment stream that is unicast-delivered and multicast-delivered.

11. A program causing a computer that supplies content as a mosaic channel to function as:
a synthesizing unit configured to generate mosaic CH streaming data by synthesizing a plurality of streams having different subjects;
a mosaic CH segment stream generating unit configured to generate a mosaic CH segment stream by delimiting the generated mosaic CH streaming data according to a timing in common with another mosaic channel;
a unicast delivering unit configured to unicast-deliver the mosaic CH segment stream;
a multicast delivering unit configured to multicast-deliver the mosaic CH segment stream; and
a metafile generating unit configured to generate a metafile that is for a reception side to receive the mosaic CH segment stream that is unicast-delivered and multicast-delivered.

12. A terminal device that receives and reproduces content delivered from a content supply device that supplies the content as a mosaic channel,
wherein the content supply device includes
a synthesizing unit configured to generate mosaic CH streaming data by synthesizing a plurality of streams having different subjects,
a mosaic CH segment stream generating unit configured to generate a mosaic CH segment stream by delimiting the generated mosaic CH streaming data according to a timing in common with another mosaic channel,
a unicast delivering unit configured to unicast-deliver the mosaic CH segment stream,
a multicast delivering unit configured to multicast-deliver the mosaic CH segment stream, and
a metafile generating unit configured to generate a metafile that is for a reception side to receive the mosaic CH segment stream that is unicast-delivered and multicast-delivered, and
wherein the terminal device is configured to acquire the metafile, to receive and reproduce the mosaic CH segment stream that is unicast-delivered or multicast-delivered, and to receive and reproduce a stream corresponding to a selected area according to a user's operation of selecting the area of the mosaic CH segment stream disposed on a screen, based on the acquired metafile.

13. A content supply system comprising:
a content supply device configured to supply content as a mosaic channel; and
a terminal device configured to receive and reproduce the content delivered from the content supply device,
wherein the content supply device includes
a synthesizing unit configured to generate mosaic CH streaming data by synthesizing a plurality of streams having different subjects,
a mosaic CH segment stream generating unit configured to generate a mosaic CH segment stream by delimiting the generated mosaic CH streaming data according to a timing in common with another mosaic channel,
a unicast delivering unit configured to unicast-deliver the mosaic CH segment stream,
a multicast delivering unit configured to multicast-deliver the mosaic CH segment stream, and
a metafile generating unit configured to generate a metafile that is for the terminal device to receive the mosaic CH segment stream that is unicast-delivered and multicast-delivered, and
wherein the terminal device is configured to acquire the metafile, to receive and reproduce the mosaic CH segment stream that is unicast-delivered or multicast-delivered, and to receive and reproduce a stream corresponding to a selected area according to a user's operation of selecting the area of the mosaic CH segment stream disposed on a screen, based on the acquired metafile.
